# EUROPEAN PATENT APPLICATION

(11) **EP 2 894 088 A1**
(43) Date of publication of application: **15.07.2015**
(21) Application number: 14198500.2
(22) Date of filing: 17.12.2014
(51) Int. Cl.: B62M 3/00, B62M 6/50

(54) **Insulator and torque sensing device having the same**

(30) Priority: 10.01.2014 KR 20140003424
(71) Applicant: Samsung Electro-Mechanics Co., Ltd., Suwon-si, Gyeonggi-do 443-743 (KR)
(72) Inventor: Oh, Myung Geun, 443-743 Youngtong-Gu, Suwon-Si, Gyeonggi-Do (KR)
(74) Representative: Heine, Christian Klaus

(57) **Abstract**

There is provided a torque sensing device including a strain gauge (20) sensing torque of a pedal shaft (1) of a bicycle; and an insulator (10) electrically insulating between a connecting wire (60) transmitting a signal of the strain gauge (20) and the pedal shaft (1).

## Description

### CROSS-REFERENCE TO RELATED APPLICATION

This application claims the benefit of Korean Patent Application No. 10-2014-0003424, filed on January 10, 2014, entitled "Insulator and Torque Sensing Device having the Same" which is hereby incorporated by reference in its entirety into this application.

### BACKGROUND

The present disclosure relates to an insulator and a torque sensing device having the same.

A bicycle has a structure in which a front wheel, which is a steering wheel, and a rear wheel, which is a driving wheel, are linearly disposed at front and rear of a frame and a passenger rotates the rear wheel by working a pedal interworked with the rear wheel to advance the bicycle forward. The bicycle is installed with a power transmission device such as a chain, a gear, or the like transmitting power generated from the pedal to the rear wheel.

Particularly, a chain type power transmission device includes a driving sprocket installed on one side of the pedal, a passive sprocket having a smaller diameter than that of the driving sprocket and installed on the rear wheel, which is the driving wheel, and a chain connecting the driving sprocket and the passive sprocket to each other.

Therefore, by the structure as described above, when the passenger works the pedal, the driving sprocket installed integrally with the pedal is rotated and the rear wheel which is connected to the passive sprocket through the chain is also simultaneously rotated, thereby advancing the bicycle forward.

The above-mentioned bicycle, which is driven using pedal effort of a user, is easily driven on a flat land, but requires much force of the user when it goes up a slope such as a hill, or the like.

In order to solve the above-mentioned problem, an electric bicycle equipped with a motor capable of driving the bicycle using driving force of the motor in addition to the pedal effort of the user has recently been developed.

That is, the electric bicycle uses a motor which is driven by a battery, and the above-mentioned motor operated bicycle is configured to select one of a drive using only force generated by working the pedal by person, a drive using only force of the motor which is driven by the battery, or a drive using both of two.

An electric bicycle according to the related art is configured to automatically adjust the driving force of the motor depending on a signal output from a torque sensor, which is mounted on a shaft of the pedal, when going up the hill.

The above-mentioned torque sensor includes a magnetic type in which if a distortion sensor coil generates a magnetic field in response to distortion, an inductor senses the distortion and generates a voltage, and a strain gauge type in which the distortion sensor is mounted between the pedal and a crank to measure the distortion.

However, the above-mentioned torque sensor is very expensive. A torque is to essentially sense distortion of a shaft, and since an amount of distortion thereof is very small, precise amplification is required.

In addition, since the shaft is rotated and a controller receiving information is not rotated, many technologies are required to transmit the information, and as a result, the torque sensor is very expensive, which in turn results in very expensive bicycle.

Further, when the torque sensor is mounted in the bicycle, it occupies much mounting space and requires a plurality of parts to be mounted, which results in difficulties in installation and maintenance.

In addition, a weight of the bicycle may be increased due to a weight of the torque sensor, and since an assist ratio of the motor is increased when the bicycle drives on and goes up the slope, consumption of the battery may be increased.

### [Related Art Document]

### [Patent Document]

(Patent Document 1) Korean Patent Laid-Open Publication No. 2012-0132593

### SUMMARY

An aspect of the present disclosure may provide an insulator capable of preventing current leakage into a pedal shaft and sensing pedal torque of the pedal shaft in a torque sensing device of an electric bicycle, and the torque sensing device having the same.

According to an aspect of the present disclosure, an insulator may include: an accommodating part formed in an inner side of the insulator to accommodate one side of the connecting wire; and a connecting hole formed to penetrate through inner and outer sides of the insulator so that an end portion of one side of the connecting wire accommodated in the accommodating part and a device disposed at the outer side of the insulator are connectable to each other, wherein the insulator electrically insulates between one side of a connecting wire transmitting a signal of a strain gauge sensing torque of a pedal shaft of bicycle and the pedal shaft.

The accommodating part may be formed in an inner peripheral surface along a length direction of the pedal shaft.

The accommodating part may be formed in a groove shape having a "⊏" shape which is opened in a central axis direction of the pedal shaft.

The insulator may further include a mounting part having an amplifying part mounted thereon, wherein the mounting part may amplify a torque value sensed by the strain gauge and may electrically insulate between the amplifying part and the pedal shaft.

The mounting part may have a screw groove formed in a surface on which the amplifying part is mounted so that the amplifying part is coupled to the mounting part by a screw.

The insulator may insulate between a slip ring of a connecting part and the pedal shaft, wherein the connecting part may electrically connect the strain gauge and a controlling part to each other in order to transmit a torque value sensed by the strain gauge to the controlling part.

One side of the connecting wire may include a lead wire connecting between the amplifying part and the slip ring.

The lead wire, the connecting hole, and the slip ring are respectively formed in a plural, such that a plurality of lead wires may be respectively connected to a plurality of slip rings through a plurality of connecting holes.

According to another aspect of the present disclosure, a torque sensing device may include: a strain gauge sensing torque of a pedal shaft of a bicycle; and an insulator electrically insulating between one side of a connecting wire transmitting a signal of the strain gauge and the pedal shaft.

The torque sensing device may further include a connecting part electrically connecting the strain gauge and a controlling part to each other in order to transmit a torque value sensed by the strain gauge to the controlling part.

The connecting part may include a slip ring provided along an outer side surface of the insulator and electrically connected to the connecting wire, and a brush which is in contact with the slip ring.

The torque sensing device may further include an amplifying part amplifying the torque value measured by the strain gauge.

The insulator may insulate between the amplifying part and the pedal shaft, and between the slip ring and the pedal shaft, and the amplifying part and the slip ring may be electrically connected through the connecting wire.

The insulator may include: an accommodating part formed in an inner side of the insulator to accommodate one side of the connecting wire; and a connecting hole formed to penetrate through inner and outer sides of the insulator so that the lead wire accommodated in the accommodating part is connectable to the slip ring.

The accommodating part may be formed in an inner peripheral surface of the insulator along a length direction of the pedal shaft.

The accommodating part may be formed in the inner peripheral surface of the insulator and may be formed in a groove shape having a "⊏" shape which is opened in a central axis direction of the pedal shaft.

One side of the connecting wire may include a lead wire connecting between the amplifying part and the slip ring.

The lead wire, the connecting hole, and the slip ring are respectively formed in a plural, such that a plurality of lead wires may be respectively connected to a plurality of slip rings through a plurality of connecting holes.

The torque sensing device may further include a torque measuring part formed on an outer peripheral surface of the pedal shaft of the bicycle, wherein the strain gauge may sense the torque of the pedal shaft through distortion measurement of the torque measuring part.

### BRIEF DESCRIPTION OF DRAWINGS

The above and other aspects, features and other advantages of the present disclosure will be more clearly understood from the following detailed description taken in conjunction with the accompanying drawings, in which:
FIG. 1 is a perspective view illustrating an insulator according to an exemplary embodiment of the present disclosure;
FIG. 2 is a front perspective view illustrating the insulator according to the exemplary embodiment of the present disclosure;
FIG. 3 is an illustrative view illustrating a torque sensing device having an insulator according to an exemplary embodiment of the present disclosure;
FIG. 4 is a perspective view illustrating the torque sensing device having the insulator according to the exemplary embodiment of the present disclosure;
FIG. 5 is a perspective view illustrating a principal part of the torque sensing device having the insulator according to the exemplary embodiment of the present disclosure; and
FIG. 6 is a cut-away perspective view illustrating a torque measuring part in the torque sensing device having the insulator according to the exemplary embodiment of the present disclosure.

### DETAILED DESCRIPTION

The objects, features and advantages of the present disclosure will be more clearly understood from the following detailed description of the exemplary embodiments taken in conjunction with the accompanying drawings. Throughout the accompanying drawings, the same reference numerals are used to designate the same or similar components, and redundant descriptions thereof are omitted. Further, in the following description, the terms "first," "second," "one side," "the other side" and the like are used to differentiate a certain component from other components, but the configuration of such components should not be construed to be limited by the terms. Further, in the description of the present disclosure, when it is determined that the detailed description of the related art would obscure the gist of the present disclosure, the description thereof will be omitted.

Hereinafter, exemplary embodiments of the present disclosure will be described in detail with reference to the accompanying drawings.

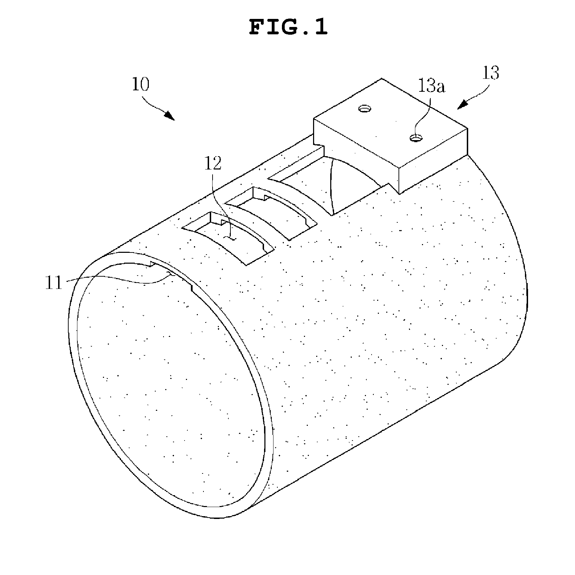

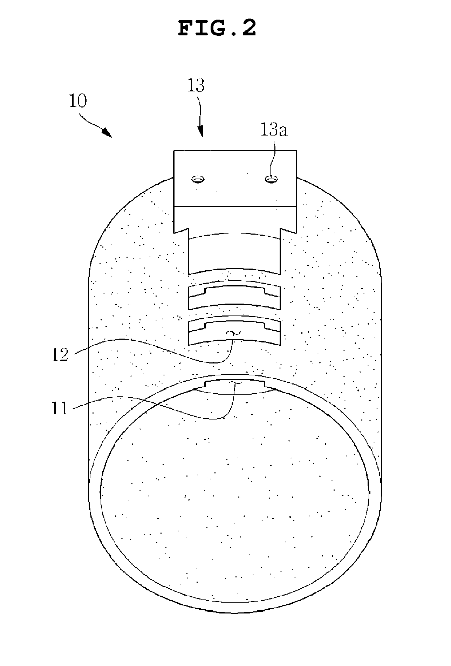

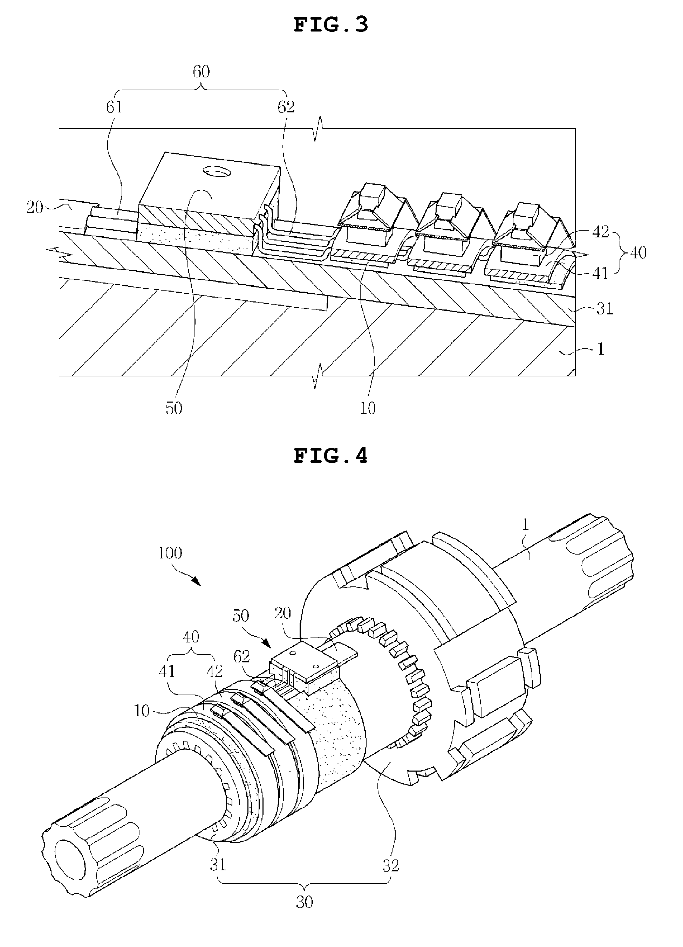

FIG. 1 is a perspective view illustrating an insulator according to an exemplary embodiment of the present disclosure, FIG. 2 is a front perspective view illustrating the insulator according to the exemplary embodiment of the present disclosure, and FIG. 3 is an illustrative view illustrating a torque sensing device having an insulator according to an exemplary embodiment of the present disclosure.

Hereinafter, referring to FIGS. 1 to 3, an insulator according to an exemplary embodiment of the present disclosure will be described in detail.

Referring to FIGS. 1 to 3, an insulator 10 according to an exemplary embodiment of the present disclosure includes an accommodating part 11 and a connecting hole 12 to electrically insulate between a torque sensing device 100 and a pedal shaft 1 of an electric bicycle.

Here, the torque sensing device 100 includes a strain gauge 20 sensing torque of the pedal shaft 1 and a connecting part 40 electrically connecting the strain gauge 20 and the controlling part (not shown) to each other to transmit a torque value sensed by the strain gauge 20 to the controlling part. In addition, the torque sensing device 100 may further include an amplifying part 50 amplifying the torque value sensed by the strain gauge 20. Here, the amplifying part 50 may be connected to the strain gauge 20 through a connecting wire 60.

The accommodating part 11 is formed in an inner side of the insulator 10 according to the exemplary embodiment of the present disclosure and accommodates and insulates one side of the connecting wire 60.

In addition, the accommodating part 11 is formed in the inner side of the insulator 10 along a length direction of the pedal shaft 1. In this case, the accommodating part 11 may be formed in an inner peripheral surface of the insulator 10, for example.

Here, the accommodating part 11 may be formed in a groove shape having a "⊏" shape which is opened in a central axis direction of the pedal shaft 1.

In addition, the connecting wire 60 may be disposed along an inner side surface of the accommodating part 11. In this case, the connecting wire 60 may be fixed on the inner side surface of the accommodating part 11 to thereby prevent a contact with the pedal shaft 1.

Meanwhile, the insulator 10 according to the exemplary embodiment of the present disclosure may further include a covering part covering a portion which is opened in a direction of the central axis of the pedal shaft 1 of the accommodating part 11.

Meanwhile, the insulator 10 according to the exemplary embodiment of the present disclosure may further include a mounting part 13 having the amplifying part 50 mounted thereon, and may electrically insulate between the amplifying part 50 and the pedal shaft 1.

Here, the mounting part 13 may have a screw groove 13a formed in a surface on which the amplifying part 50 is mounted so that the amplifying part 50 may be coupled to the mounting part 13 by a screw.

The connecting hole 12 is formed to penetrate through inner and outer sides of the insulator 10 according to the exemplary embodiment of the present disclosure. In this case, the connecting hole 12 is formed to penetrate through the inner and outer sides so that an end portion of the connecting wire 60 accommodated in the accommodating part 11 may be connected to a device disposed at an outer side of the insulator 10.

In this case, the device disposed at the outer side of the insulator 10 may be the connecting part 40, for example. Here, the connecting part 40 may include a slip ring 41 and a brush 42. In addition, the slip ring 41 may be provided along an outer side surface of the insulator 10 and may be electrically connected to the connecting wire 60. In this case, the insulator 10 may electrically insulate between the slip ring 41 and the pedal shaft 1.

Meanwhile, the connecting wire 60, the connecting hole 12, and the slip ring 41 may be respectively in plural, and subsequently, a plurality of connecting wires 60 may be respectively connected to a plurality of slip rings 41 through a plurality of connecting holes 12. In this case, for example, the connecting wire 60, the connecting hole 12, and the slip ring 41 may be respectively three, and subsequently, three connecting wires 60 may be respectively connected to three slip rings 41 through three connecting holes 12.

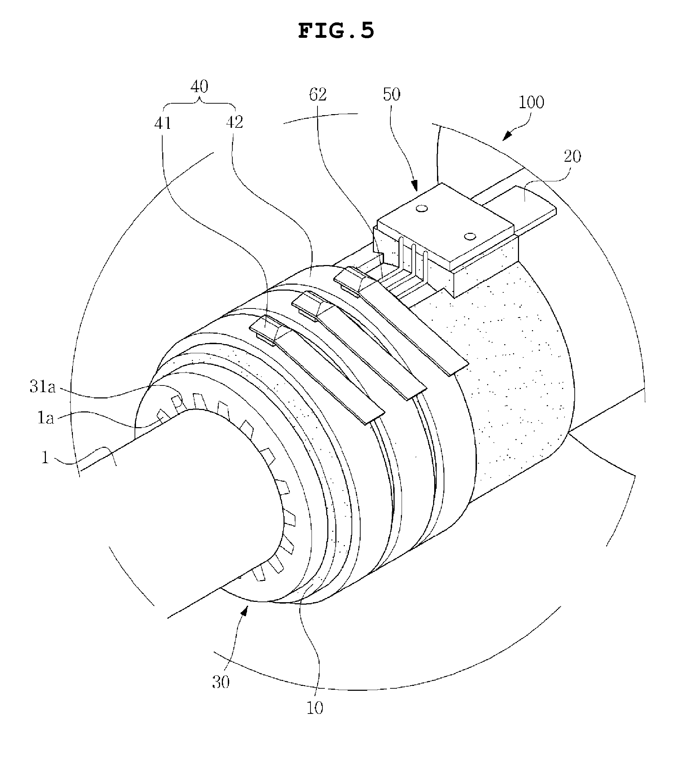

FIG. 4 is a perspective view illustrating the torque sensing device having the insulator according to the exemplary embodiment of the present disclosure and FIG. 5 is a perspective view illustrating a principal part of the torque sensing device having the insulator according to the exemplary embodiment of the present disclosure.

Referring to FIGS. 4 and 5, a torque sensing device 100 having an insulator according to an exemplary embodiment of the present disclosure includes a strain gauge 20 and an insulator 10.

Hereinafter, referring to FIGS. 1 to 5, the torque sensing device according to the exemplary embodiment of the present disclosure will be described in detail.

Referring to FIG. 4, the strain gauge 20 senses torque of the pedal shaft 1 of the bicycle. Here, the strain gauge 20 may measure distortion of the pedal shaft 1 by measuring an amount of distortion of the pedal shaft 1, thereby making it possible to sense the torque of the pedal shaft 1.

In addition, the strain gauge 20 is connected to the connecting part 40 through the connecting wire 60 so as to be able to transmit a torque sensed value. Here, the connecting wire 60 includes a lead wire 61 electrically connecting the strain gauge 20 and the amplifying part 50 to each other, and a lead wire 62 connecting the amplifying part 50 and the connecting part 40 to each other.

The amplifying part 50 amplifies the torque value sensed by the strain gauge 20. Here, the amplifying part 50 includes the lead wire 62 which is electrically connected to the connecting part 40 so as to transmit the amplified torque value. In this case, the lead wire 62 may be three.

The insulator 10 electrically insulates between the connecting wire 60 transmitting a signal of the strain gauge 20 and the pedal shaft 1. In this case, for example, the insulator 10 may insulate between the lead wire 62 electrically connecting the amplifying part and the connecting part 40 to each other among the connecting wires 60, and the pedal shaft 1, but the present disclosure is not limited thereto.

Here, the insulator 10 is disposed on an outer surface of the pedal shaft 1 to thereby electrically insulate between the pedal shaft 1 and the connecting part 40.

In addition, the insulator 10 includes the accommodating part 11 and the connecting hole 12.

Here, the accommodating part 11 is formed in the inner side of the insulator 10 and accommodates and insulates one side of the connecting wire 60. In this case, one side of the connecting wire 60 may include the lead wire 62, for example.

In addition, the accommodating part 11 is formed in the inner side of the insulator 10 along a length direction of the pedal shaft 1. In this case, the accommodating part 11 may be formed in an inner peripheral surface of the insulator 10, for example.

Here, the accommodating part 11 may be formed in a groove shape having a "⊏" shape which is opened in a central axis direction of the pedal shaft 1.

In addition, the lead wire 62 of the connecting wire 60 may be disposed along an inner side surface of the accommodating part 11. In this case, the lead wire 62 may be fixed on the inner side surface of the accommodating part 11 to thereby prevent a contact with the pedal shaft 1.

Meanwhile, the insulator 10 according to the exemplary embodiment of the present disclosure may further include a covering part (not shown) covering a portion which is opened in a direction of the central axis of the pedal shaft 1 of the accommodating part 11.

Meanwhile, the insulator 10 may further include a mounting part 13 having the amplifying part 50 mounted thereon, and may electrically insulate between the amplifying part 50 and the pedal shaft 1.

Here, the mounting part 13 may have a screw groove 13a formed in a surface on which the amplifying part 50 is mounted so that the amplifying part 50 may be coupled to the mounting part 13 by a screw.

The connecting hole 12 is formed to penetrate through inner and outer sides of the insulator 10. In this case, the connecting hole 12 is formed to penetrate through the inner and outer sides so that an end portion of the lead wire 62 of the connecting wire 60 accommodated in the accommodating part 11 may be connected to a device disposed at an outer side of the insulator 10.

In this case, the device disposed at the outer side of the insulator 10 may be the connecting part 40, for example. Here, the connecting part 40 may include a slip ring 41 and a brush 42. In addition, the slip ring 41 may be provided along an outer side surface of the insulator 10 and may be electrically connected to the connecting wire 60. In this case, the insulator 10 may electrically insulate between the slip ring 41 and the pedal shaft 1.

Meanwhile, the lead wire 62, the connecting hole 12, and the slip ring 41 may be respectively in plural, and subsequently, a plurality of lead wires 62 may be respectively connected to a plurality of slip rings 41 through a plurality of connecting holes 12. In this case, for example, the lead wire 62, the connecting hole 12, and the slip ring 41 may be respectively three, and subsequently, three lead wires 62 may be respectively connected to three slip rings 41 through three connecting holes 12.

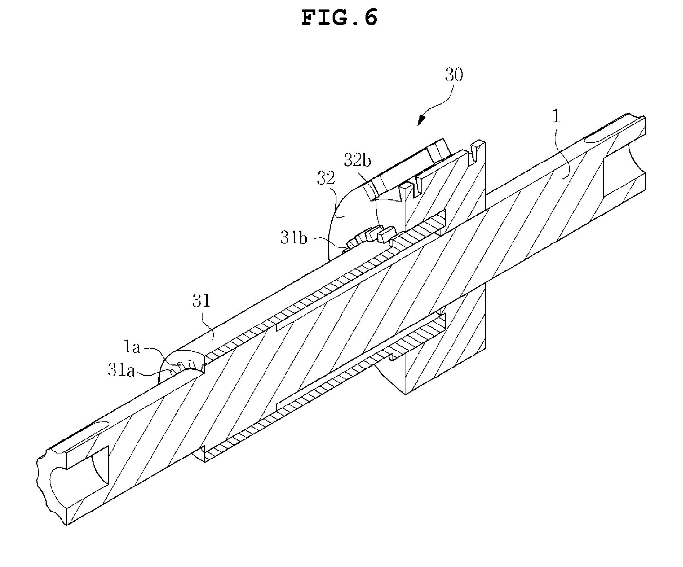

FIG. 6 is a cut-away perspective view illustrating a torque measuring part in the torque sensing device having the insulator according to the exemplary embodiment of the present disclosure.

Referring to FIGS. 4 and 6, the torque sensing device 100 according to the exemplary embodiment of the present disclosure further includes a torque measuring part 30, thereby making it possible to measure torque of the pedal shaft 1 using the torque measuring part 30.

The torque measuring part 30 is formed on an outer peripheral surface of the pedal shaft 1 of the bicycle and is provided to easily measure the torque.

Here, the torque measuring part 30 has both sides coupled to the pedal shaft 1 and a central side disposed at a distance which is spaced apart from the pedal shaft 1 by a predetermined interval. Therefore, referring to FIGS. 3 and 5, the distortion of the pedal shaft 1 may be easily measured by the strain gauge 20 measuring an amount of distortion using the torque measuring part 30 having both sides which are only in contact with the pedal shaft 1. As a result, the torque value of the pedal shaft 1 may be sensed by the measured distortion.

In addition, the torque measuring part 30 has a plurality of coupling protrusions 1a formed on the outer surface of the pedal shaft 1 which is in contact with both sides of the torque measuring part 30 and coupling grooves 31a corresponding to the coupling protrusions 1a formed on the pedal shaft 1 at both sides of the torque measuring part 30, thereby making it possible to easily measure the torque of the pedal shaft 1.

Further, the torque measuring part 30 is provided in a pair, which may be respectively in contact with both sides of the pedal shaft 1. In this case, the torque measuring part 30 may include a first torque measuring part 31 and a second torque measuring part 32, the first torque measuring part 31 may have a plurality of fixing protrusions 31b formed on an outer peripheral surface thereof, and the second torque measuring part 32 may have fixing grooves 32b formed to have a shape corresponding to the plurality of fixing protrusions 31b.

As set forth above, according to the exemplary embodiments of the present disclosure, the current leakage into the pedal shaft of the electric bicycle may be prevented by the insulator.

In addition, according to the exemplary embodiments of the present disclosure, the use of the expensive torque sensor may be replaced by sensing the pedal torque of the pedal shaft using the strain gauge, thereby making it possible to reduce use costs.

As a result, costs may be significantly reduced, and the space which is occupied by the torque sensor may be reduced.

Although the embodiments of the present disclosure have been disclosed for illustrative purposes, it will be appreciated that the present disclosure is not limited thereto, and those skilled in the art will appreciate that various modifications, additions and substitutions are possible, without departing from the scope and spirit of the disclosure.

Accordingly, any and all modifications, variations or equivalent arrangements should be considered to be within the scope of the disclosure, and the detailed scope of the disclosure will be disclosed by the accompanying claims.

## Claims

1. An insulator comprising:
an accommodating part formed in an inner side of the insulator to accommodate one side of a connecting wire; and
a connecting hole formed to penetrate through inner and outer sides of the insulator so that an end portion of one side of the connecting wire accommodated in the accommodating part and a device disposed at the outer side of the insulator are connectable to each other,
wherein the insulator electrically insulates between one side of the connecting wire transmitting a signal of a strain gauge sensing torque of a pedal shaft of bicycle and the pedal shaft.

2. The insulator of claim 1, wherein the accommodating part is formed in an inner peripheral surface along a length direction of the pedal shaft.

3. The insulator of claim 2, wherein the accommodating part is formed in a groove shape having a "⊏" shape which is opened in a central axis direction of the pedal shaft.

4. The insulator of claim 1, further comprising a mounting part having an amplifying part mounted thereon, wherein the insulator amplifies a torque value sensed by the strain gauge and electrically insulates between the amplifying part and the pedal shaft.

5. The insulator of claim 4, wherein the mounting part has a screw groove formed in a surface on which the amplifying part is mounted so that the amplifying part is coupled to the mounting part by a screw.

6. The insulator of claim 4, wherein the insulator insulates between a slip ring of a connecting part and the pedal shaft, the connecting part electrically connecting the strain gauge and a controlling part to each other in order to transmit a torque value sensed by the strain gauge to the controlling part.

7. The insulator of claim 6, wherein one side of the connecting wire includes a lead wire connecting between the amplifying part and the slip ring.

8. The insulator of claim 7, wherein the lead wire, the connecting hole, and the slip ring are respectively formed in a plural, such that a plurality of lead wires are respectively connected to a plurality of slip rings through a plurality of connecting holes.

9. A torque sensing device comprising:
a strain gauge sensing torque of a pedal shaft of a bicycle; and
an insulator electrically insulating between one side of a connecting wire transmitting a signal of the strain gauge and the pedal shaft.

10. The torque sensing device of claim 9, further comprising a connecting part electrically connecting the strain gauge and a controlling part to each other in order to transmit a torque value sensed by the strain gauge to the controlling part.

11. The torque sensing device of claim 10, wherein the connecting part includes a slip ring provided along an outer side surface of the insulator and electrically connected to the connecting wire, and a brush which is in contact with the slip ring.

12. The torque sensing device of claim 11, further comprising an amplifying part amplifying the torque value measured by the strain gauge.

13. The torque sensing device of claim 12, wherein the insulator insulates between the amplifying part and the pedal shaft, and between the slip ring and the pedal shaft, and the amplifying part and the slip ring are electrically connected through the connecting wire.

14. The torque sensing device of claim 13, wherein the insulator includes:
an accommodating part formed in an inner side of the insulator to accommodate one side of the connecting wire; and
a connecting hole formed to penetrate through inner and outer sides of the insulator so that the lead wire accommodated in the accommodating part is connectable to the slip ring.

15. The torque sensing device of claim 14, wherein the accommodating part is formed in an inner peripheral surface of the insulator along a length direction of the pedal shaft.

16. The torque sensing device of claim 15, wherein the accommodating part is formed in the inner peripheral surface of the insulator and is formed in a groove shape having a "⊏" shape which is opened in a central axis direction of the pedal shaft.

17. The torque sensing device of claim 16, wherein one side of the connecting wire includes a lead wire connecting between the amplifying part and the slip ring.

18. The torque sensing device of claim 17, wherein the lead wire, the connecting hole, and the slip ring are respectively formed in a plural, such that a plurality of lead wires are respectively connected to a plurality of slip rings through a plurality of connecting holes.

19. The torque sensing device of claim 9, further comprising a torque measuring part formed on an outer peripheral surface of the pedal shaft of the bicycle,
wherein the strain gauge senses the torque of the pedal shaft through distortion measurement of the torque measuring part.
